# FASCICULE DE BREVET EUROPEEN

(11) **EP 0 559 536 B1**
(45) Date de publication et mention de la délivrance du brevet: **17.07.1996**
(21) Numéro de dépôt: 93400511.7
(22) Date de dépôt: 01.03.1993
(51) Int. Cl.: G21C 19/48, C22B 3/00, C22B 11/02

(54) **Procédé de piégeage du ruthénium gazeux sur de la polyvinylpyridine, utilisable en particulier pour récupérer le ruthénium radioactif provenant de combustibles nucléaires irradiés**
Verfahren zur Getterung auf Polyvinylpyridin von gasförmigem Ruthenium, besonders anwendbar zur Wiedergewinnung von radioaktivem Ruthenium aus bestrahlten Brennstoffen
Process for gettering gaseous ruthenium onto polyvinylpyridine, in particular useful for the recuperation of radioactive ruthenium from irradiated nuclear fuels

(30) Priorité: 03.03.1992 FR 9202514
(43) Date de publication de la demande: 08.09.1993
(73) Titulaire: COMPAGNIE GENERALE DES MATIERES NUCLEAIRES (COGEMA), F-78141 Velizy-Villacoublay Cédex (FR)
(72) Inventeur: Foos, Jacques, F-91400 Orsay (FR); Lemaire, Marc, F-69100 Villeurbanne (FR); Guy, Alain, F-77135 Pontcarre (FR); Draye, Micheline, F-69003 Lyon (FR); Chomel, Rodolph, F-84850 Camaret/Aigues (FR); Deloge, André, F-30200 Bagnols Sur Ceze (FR); Doutreluingne, Pierre, F-30200 Bagnols sur Ceze (FR)
(74) Mandataire: Des Termes, Monique

(56) Documents cités:
- DATABASE WPIL Section Ch, Week 8527, Derwent Publications Ltd., London, GB; Class A88, AN 85-162174 & JP-A-60 092 309
- DATABASE WPIL Section Ch, Week 8729, Derwent Publications Ltd., London, GB; Class J01, AN 87-202131 & JP-A-62 129 798
- DATABASE WPIL Section Ch, Week 8847, Derwent Publications Ltd., London, GB; Class K07, AN 88-334306 & JP-A-63 247 699

## Description

### Procédé de piégeage du ruthénium gazeux sur de la polyvinylpyridine, utilisable en particulier pour récupérer le ruthénium radioactif provenant de combustibles nucléaires irradiés.

La présente invention a pour objet un procédé de piégeage et de fixation du ruthénium sous forme gazeuse, en particulier du tétroxyde de ruthénium, présent dans un courant gazeux d'une installation de retraitement de combustibles nucléaires irradiés.

L'irradiation des combustibles nucléaires dans les réacteurs de puissance, conduit à la production de nombreux produits de fission dont les masses atomiques vont de 70 à 160. Ces produits de fission se retrouvent généralement dans les effluents produits à la fin du cyle du combustible. Ils comprennent en particulier des métaux du groupe du platine tels que le palladium, le rhodium et le ruthénium, qui sont des éléments valorisables, notamment le rhodium en raison de son utilisation dans les pots catalytiques pour l'industrie automobile.

Malheureusement, les procédés de séparation connus de ces métaux tels que ceux décrits par Hazelton et al dans PNL-5758 - UC - 70, 1986, conduisent à récupérer ensemble le rhodium et le ruthénium, ce qui ne permet pas de valoriser le rhodium en raison de la radioactivité élevée du ruthénium.

Par ailleurs, le ruthénium 106 est l'un des principaux éléments qui contribue à la radioactivité des effluents.

Il serait donc intéressant de disposer d'un procédé pour séparer efficacement le ruthénium des effluents et diminuer ainsi leur activité.

Un procédé connu de séparation du ruthénium consiste à volatiliser celui-ci sous forme de tétroxyde de ruthénium par oxydation du ruthénium présent dans des solutions nitriques, au moyen de periodate de potassium, comme il est décrit par Bush dans Platinum Metals Rev, 1991, 35, (4), p. 202-208.

Cependant, ce ruthénium gazeux doit être ensuite récupéré, ce qui pose d'autres problèmes non résolus à l'heure actuelle.

La présente invention a précisément pour objet un procédé de piégeage et de fixation du ruthénium sous forme gazeuse, qui permet de récupérer plus de 99% du ruthénium.

Selon l'invention, le procédé de piégeage du ruthénium présent sous forme gazeuse dans un gaz, consiste à mettre en contact le gaz avec un adsorbant comprenant un polymère ou copolymère de vinylpyridine et à séparer le gaz de l'adsorbant sur lequel est fixé le ruthénium.

Dans ce procédé, le choix d'un adsorbant à base de polymère ou copolymère de vinylpyridine permet de piéger le ruthénium sous forme gazeuse avec une efficacité très élevée puisque le rendement de fixation du ruthénium est supérieur à 99%.

Le gaz contenant le ruthénium sous forme gazeuse peut être en particulier constitué par des vapeurs formées lors d'un traitement de volatilisation du ruthénium effectué sur un effluent aqueux contenant des produits de fission provenant du retraitement de combustibles nucléaires irradiés.

Aussi, l'invention a également pour objet un procédé de séparation du ruthénium radioactif présent dans un effluent aqueux contenant des produits de fission provenant du retraitement de combustibles nucléaires irradiés, qui consiste :
a) à chauffer l'effluent à une température de 100 à 150°C en présence d'un agent oxydant pour oxyder le ruthénium en tétroxyde de ruthénium volatil, et
b) à piéger le ruthénium ainsi volatilisé en mettant en contact le gaz contenant le ruthénium volatilisé avec un adsorbant comprenant un polymère ou copolymère de vinylpyridine, et en séparant le gaz de l'adsorbant sur lequel est fixé le ruthénium.

Ce mode de piégeage du ruthénium est particulièrement avantageux car il peut être utilisé avec de nombreux types d'effluents, même lorsque ceux-ci ont des teneurs élevées en sels, pouvant aller par exemple jusqu'à 100g/l.

Dans l'étape a) de volatilisation du ruthénium sous forme de tétroxyde de ruthénium, on peut utiliser comme agent oxydant du periodate de métal alcalin ou un hypochlorite de métal alcalin, tel que l'hypochlorite de sodium.

Généralement, dans cette étape, on chauffe l'effluent à une température de 100 à 150°C.

Les adsorbants susceptibles d'être utilisés dans l'invention, sont en particulier des polymères de vinylpyridine tels que la poly-4-vinylpyridine, réticulés par des agents réticulants appropriés tels que le divinylbenzène et le diméthacrylate de tétraéthylèneglycol. On peut aussi utiliser des copolymères de vinyl-4-pyridine et de divinylbenzène.

De préférence, on emploie la polyvinyl-4-pyridine réticulée ayant une granulométrie de 1,3 à 250 mm (15 à 60mesh).

En effet, ces polyvinylpyridines réticulées ont de très bonnes propriétés d'adsorption du tétroxyde de ruthénium. Par ailleurs, elles ont l'avantage d'être stables à des températures allant jusqu'à 260°C sous pression atmosphérique, et de résister aux agents oxydants et réducteurs, ce qui permet leur utilisation en présence de gaz contenant des constituants tels que les vapeurs nitreuses, l'oxygéne, le chlore et la vapeur d'eau. De plus, elles ne sont pas sensibles à l'irradiation puisqu'on observe aucune dégradation après une irradiation de 8 heures 24 minutes, par une source de césium 137 produisant un débit de dose de 2Mrad/h, soit 1,05.10¹⁸MeV/kg.

La polyvinyl-4-pyridine utilisée de préférence dans l'invention présente une température de transition vitreuse de 151°C qui n'est pas modifiée par irradiation. Par ailleurs, on peut l'utiliser sous la forme d'une poudre de granulométrie appropriée.

Pour mettre en oeuvre le procédé de l'invention, on peut en particulier filtrer le gaz contenant le ruthénium sous forme gazeuse à travers une poudre de l'adsorbant.

De préférence, on opère à une température supérieure à la température ambiante, par exemple avec une température du gaz à l'entrée du filtre de 53 à 63°C.

La quantité d'adsorbant utilisée dépend de la quantité de ruthénium à extraire. Généralement on utilise de 0,07 à 0,5g de polyvinylpyridine pour 1mCi de Ru.

Après fixation du ruthénium sur la polyvinylpyridine, on peut récupérer celui-ci en solution aqueuse, si on le désire, par traitement de la polyvinylpyridine dans une solution aqueuse appropriée pour y dissoudre le ruthénium. A titre d'exemple, une telle solution peut être constituée par une solution d'acide sulfurique.

D'autres caractéristiques et avantages de l'invention apparaîtront mieux à la lecture de la description qui suit d'exemples de mise en oeuvre du procédé de l'invention, donnés bien entendu à titre illustratif et non limitatif, en référence au dessin annexé sur lequel
- la figure 1 représente une installation de filtration d'un gaz contenant du ruthénium, et
- la figure 2 représente une installation pour récupérer dans une solution aqueuse le ruthénium fixé sur l'adsorbant de l'installation de la figure 1.

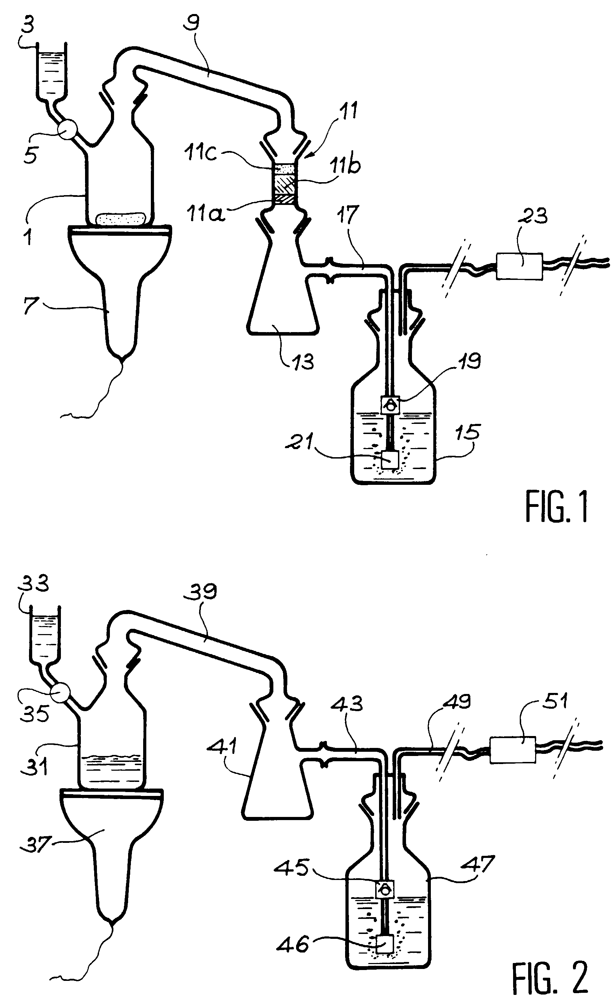

Sur la figure 1, on a représenté une installation permettant de volatiliser, puis de piéger le ruthénium présent dans une solution aqueuse de produits de fission.

Cette installation comprend un réacteur (1) apte à recevoir la solution de produits de fission, qui est associé à un distributeur (3) d'agent oxydant par une conduite munie d'une vanne (5). Le réacteur (1) peut être chauffé par un moyen de chauffage (7) et les vapeurs émises sont amenées par une conduite (9) sur un filtre (11) piégeant le ruthénium.

Le filtre à ruthénium (11) comprend un fritté (11a), au-dessus duquel est disposée de la poudre de polyvinylpyridine (11b) qui est recouverte d'un coton de verre (11c).

La vapeur filtrée dans le filtre (11) est recueillie dans un récipient (13), puis amenée dans un flacon de garde (15) rempli d'une solution de soude par une conduite (17) munie d'un clapet anti-retour (19) et d'un diffuseur de gaz (21) immergé dans la solution de soude. Le flacon de gaz (15) est en communication avec un venturi (23) permettant de faire le vide dans l'installation.

Pour faire fonctionner cette installation, on introduit dans le réacteur (1) une solution aqueuse de produits de fission constituée par un concentrat de produits de fission et on chauffe cette solution à une température de 100 à 150°C avec le moyen de chauffage (7) après avoir introduit dans celle-ci de l'hypochlorite de sodium provenant du distributeur (3).

Dans ces conditions, le ruthénium est oxydé par l'hypochlorite de sodium en tétroxyde de ruthénium qui est volatilisé et amené par la conduite (9) avec le gaz formé par les vapeurs provenant de la solution qui comprennent NO₂, Cl₂, H₂O et O₂, sur le filtre à ruthénium (11). La température du gaz à l'entrée du filtre est de 58 ^{±} 5°C. Après passage sur le filtre, le gaz est recueilli dans le récipient (13), puis dans le flacon de garde (15) rempli de soude 1N dans laquelle le ruthénium non fixé sur le filtre se dissout.

Le filtre à ruthénium est composé d'un tube en verre de 30mm de diamètre placé verticalement et comprenant un fritté (11a) sur lequel sont déposés 3g de polyvinyl-4 pyridine réticulée ayant une granulométrie de 60mesh et un taux de réticulation de 2%, maintenus par du coton de verre (11c).

Dans le flacon de garde (15), on récupère ainsi le distillat et le ruthénium non- fixé sur le filtre.

Pour déterminer la quantité de ruthénium piégée sur le filtre, on dissout la poudre de polyvinylpyridine du filtre (11) dans de l'acide sulfurique en utilisant l'installation représentée sur la figure 2.

Cette installation comprend un réacteur (31) associé à un distributeur d'acide sulfurique (33) par une conduite munie d'une vanne (35), et à des moyens de chauffage (37). Les vapeurs émises dans ce réacteur (31) peuvent être amenées par une conduite (39) dans un récipient (41) relié par une conduite (43) munie d'un clapet anti-retour (45) et d'un diffuseur (46) à un flacon de garde (47) contenant de la soude. Ce flacon de garde est associé par une conduite (49) à un venturi (51) pour faire le vide dans l'installation.

Pour récupérer en solution le ruthénium fixé sur le filtre, on introduit la poudre de polyvinylpyridine chargée de ruthénium dans le réacteur (31) et on lui ajoute de l'acide sulfurique concentré, puis on chauffe. Lors de ce chauffage, la polyvinylpyridine est dissoute dans l'acide sulfurique en même temps que le ruthénium qui n'est pas volatil dans ce milieu, et le ruthénium éventuellement volatilisé est récupéré dans le flacon de garde (47) où il se dissout dans la soude 1N.

On analyse alors les solutions obtenues dans le flacon de garde (15) et le flacon de garde (47) par spectrométrie gamma pour déterminer leurs teneurs en ruthénium.

Cette méthode d'analyse permet d'obtenir une précision de 2% pour des activités supérieures à 500mCi/l, de 5% entre 1 et 500mCi/l et de 10% pour des activités inférieures à 1mCi/l.

Les exemples suivants illustrent les résultats obtenus lors du traitement de concentrats de produits de fission.

### Exemple 1.

Dans cet exemple, on traite de la façon décrite ci-dessus un concentrat de produits de fission comprenant 49,8Ci/l de cérium 144, 49,8Ci/l de praséodyme 144, 35,7Ci/l de ruthénium 106, 49,4Ci/l de césium 137 et 6,4Ci/l de césium 134, en utilisant 2ml de concentrat (71,4mCi de Ru 106) auquel on ajoute 60ml de NaClO et en chauffant jusqu'à évaporation, soit pendant 1h.

En fin d'opération, il reste 33,268mCi de Ru dans le réacteur et on recueille 38,07mCi de Ru sur le filtre (11) et 0,062mCi de ruthénium dans le flacon de garde (15).

On obtient ainsi un rendement de fixation du ruthénium de 99,8% et un taux de fixation du ruthénium de 12,7mCi de Ru 106 par gramme de polyvinylpyridine.

### Exemple 2.

On suit le même mode opératoire que dans l'exemple 1 pour traiter 2ml de concentrat de produits de fission comprenant 21Ci/l de Ce 144, 21Ci/l de Pr 144, 16,5Ci/l de Ru 106(33mCi), 37,5Ci/l de Cs 137, 4,4Ci/l de Cs 134 et 0,7Ci/l de Eu 154, en réalisant le chauffage pendant seulement 20min et en utilisant 18ml de NaClO.

En fin d'opération, il reste 24mCi de Ru dans le réacteur et on recueille 8,2mCi de ruthénium sur le filtre (11) et 0,0396mCi de ruthénium dans le flacon de garde (15).

On obtient ainsi un rendement de fixation du ruthénium de 99,5% et un taux de fixation du Ru 106 de 2,73mCi/g de polyvinylpyridine.

Les résultats obtenus dans ces exemples montrent que l'utilisation de polyvinylpyridine pour piéger le ruthénium sous forme gazeuse, permet d'atteindre des rendements de fixation très importants.

### Exemple 3.

Dans cet exemple, on traite le filtre chargé de ruthénium de l'exemple 1 pour récupérer le ruthénium fixé dans une solution aqueuse sulfurique en utilisant l'installation de la figure 2.

Dans ce but, on introduit dans le réacteur (31) la poudre de polyvinylpyridine du filtre de l'exemple 1 avec 30ml de H₂SO₄ concentré et on chauffe à 150°C. On dissout ainsi la PVP ainsi que le ruthénium dans l'acide sulfurique car Ru n'est pas volatil en milieu sulfurique. Les vapeurs produites sont aspirées dans le flacon de garde (47) rempli de soude pour y recueillir le ruthénium qui se serait éventuellement volatilisé.

En fin d'opération, on détermine la teneur en Ru de la solution sulfurique et de la solution de soude par spectrométrie gamma.

Les résultats obtenus sont les suivants :
- solution sulfurique du
   réacteur (31) : 38mCi de Ru 106
- solution de soude du
   flacon de garde (47) : 0,0736mCi de Ru 106.

Le taux de récupération du ruthénium dans la solution sulfurique est donc très important puisqu'il est de 99,8%.

## Revendications

1. Procédé de piégeage du ruthénium présent sous forme gazeuse dans un gaz, caractérisé en ce qu'il consiste à mettre en contact le gaz avec un adsorbant comprenant un polymère ou copolymère de vinylpyridine et à séparer le gaz de l'adsorbant sur lequel est fixé le ruthénium.

2. Procédé de séparation du ruthénium radioactif présent dans un effluent aqueux contenant des produits de fission provenant du retraitement de combustibles nucléaires irradiés, caractérisé en ce qu'il consiste
a) à chauffer l'effluent à une température de 100 à 150°C en présence d'un agent oxydant pour oxyder le ruthénium en tétroxyde de ruthénium volatil, et
b) à piéger le ruthénium ainsi volatilisé en mettant en contact un gaz contenant le ruthénium volatilisé avec un adsorbant comprenant un polymère ou copolymère de vinylpyridine, et en séparant le gaz de l'adsorbant sur lequel est fixé le ruthénium.

3. Procédé selon la revendication 2, caractérisé en ce que l'agent oxydant est l'hypochlorite de sodium.

4. Procédé selon l'une quelconque des revendications 1 et 2, caractérisé en ce que l'on réalise le chauffage sous vide.

5. Procédé selon l'une quelconque des revendications 1 et 2, caractérisé en ce que l'adsorbant est constitué par de la poly-4-vinylpyridine réticulée.

6. Procédé selon l'une quelconque des revendications 1 et 2, caractérisé en ce que l'on effectue la mise en contact et la séparation du gaz avec l'adsorbant, en filtrant le gaz à travers une poudre dudit adsorbant.

7. Procédé selon l'une quelconque des revendications 1 et 2, caractérisé en ce que le gaz comprend en outre au moins un constituant choisi parmi les vapeurs nitreuses, l'oxygéne, le chlore et la vapeur d'eau.

8. Procédé selon l'une quelconque des revendications 1 et 2, caractérisé en ce que l'on effectue la mise en contact du gaz avec l'adsorbant à une température de 53 à 63°C.

9. Procédé selon l'une quelconque des revendications 1 et 2, caractérisé en ce que l'on traite ensuite l'adsorbant pour dissoudre le ruthénium fixé sur l'adsorbant dans une solution aqueuse.

10. Procédé selon la revendication 9, caractérisé en ce que la solution aqueuse est une solution d'acide sulfurique.

## Claims

1. Process for the trapping of ruthenium present in gaseous form in a gas, characterized in that it consists of contacting the gas with an adsorbent incorporating vinyl pyridine polymer or copolymer and separating the gas from the adsorbent on which the ruthenium is fixed.

2. Process for the separation of radioactive ruthenium present in an aqueous effluent containing fission products resulting from the reprocessing of irradiated nuclear fuels, characterized in that it comprises
a) heating the effluent to a temperature of 100 to 150°C in the presence of an oxidizing agent for oxidizing the ruthenium to volatile ruthenium tetroxide and
b) trapping the thus volatilized ruthenium by contacting a gas containing the volatilized ruthenium with an adsorbent incorporating a vinyl pyridine polymer or copolymer and separating the gas from the adsorbent on which the ruthenium is fixed.

3. Process according to claim 2, characterized in that the oxidizing agent is sodium hypochlorite.

4. Process according to either of the claims 1 and 2, characterized in that heating takes place in vacuo.

5. Process according to either of the claims 1 and 2, characterized in that the absorbent is constituted by crosslinked poly-4-vinyl pyridine.

6. Process according to either of the claims 1 and 2, characterized in that the contacting and separation of the gas with the adsorbent are carried out by filtering the gas through a powder of said adsorbent.

7. Process according to either of the claims 1 and 2, characterized in that the gas also comprises at least one constituent chosen from among nitrous vapours, oxygen, chlorine and water vapour.

8. Process according to either of the claims 1 and 2, characterized in that the contacting of the gas with the adsorbent takes place at a temperature of 53 to 63°C.

9. Process according to either of the claims 1 and 2, characterized in that the adsorbent is then treated to dissolve the ruthenium fixed to the adsorbent in an aqueous solution.

10. Process according to claim 9, characterized in that the aqueous solution is a sulphuric acid solution.

## Patentansprüche

1. Verfahren zur Getterung von Ruthenium, welches in Gasform in einem Gas vorhanden ist, dadurch gekennzeichnet, daß es darin besteht, das Gas mit einem Adsorbens in Kontakt zu bringen, welches ein Vinylpyridin-Polymer oder -Copolymer umfaßt, und das Gas von dem Adsorbens zu trennen, auf welchem das Ruthenium fixiert ist.

2. Verfahren zur Abtrennung von radioaktivem Ruthenium, das in einem Abwasser vorhanden ist, welches Spaltprodukte enthält, die von der Wiederaufarbeitung bestrahlter Kernbrennstoffe stammen, dadurch gekennzeichnet, daß es darin besteht,
a) das Abwasser in Gegenwart eines Oxydationsmittels auf eine Temperatur von 100 bis 150°C zu erwärmen, um das Ruthenium zu flüchtigem Rutheniumtetroxid zu oxydieren, und
b) das derart verflüchtigte Ruthenium zu gettern, indem man ein Gas, welches das verflüchtigte Ruthenium enthält, mit einem Adsorbens in Kontakt bringt, welches ein Vinylpyridin-Polymer oder -Copolymer umfaßt, und indem man das Gas von dem Adsorbens, auf welchem das Ruthenium fixiert ist, abtrennt.

3. Verfahren nach Anspruch 2, dadurch gekennzeichnet, daß das Oxydationsmittel Natriumhypochlorit ist.

4. Verfahren nach einem der Ansprüche 1 und 2, dadurch gekennzeichnet, daß man die Erwärmung unter Vakuum ausführt.

5. Verfahren nach einem der Ansprüche 1 und 2, dadurch gekennzeichnet, daß das Adsorbens aus vernetztem Poly(4-vinyl-pyridin) besteht.

6. Verfahren nach einem der Ansprüche 1 und 2, dadurch gekennzeichnet, daß man das In-Kontakt-Bringen und die Trennung des Gases und des Adsorbens dadurch ausführt, daß man das Gas durch ein Pulver des genannten Adsorbens filtriert.

7. Verfahren nach einem der Ansprüche 1 und 2, dadurch gekennzeichnet, daß das Gas ferner mindestens einen Bestandteil umfaßt, der unter den nitrosen Gasen, Sauerstoff, Chlor und Wasserdampf gewählt ist.

8. Verfahren nach einem der Ansprüche 1 und 2, dadurch gekennzeichnet, daß man das In-Kontakt-Bringen des Gases mit dem Adsorbens bei einer Temperatur von 53 bis 63°C ausführt.

9. Verfahren nach einem der Ansprüche 1 und 2, dadurch gekennzeichnet, daß man anschließend das Adsorbens behandelt, um das auf dem Adsorbens fixierte Ruthenium in einer wäßrigen Lösung zu lösen.

10. Verfahren nach Anspruch 9, dadurch gekennzeichnet, daß die wäßrige Lösung eine Lösung von Schwefelsäure ist.
